# EUROPÄISCHE PATENTSCHRIFT

(11) **EP 1 886 881 B1**
(45) Veröffentlichungstag und Bekanntmachung des Hinweises auf die Patenterteilung: **24.10.2012**
(21) Anmeldenummer: 07111212.2
(22) Anmeldetag: 27.06.2007
(51) Int. Cl.: B60R 22/48, B60R 21/01, B60R 21/0134, B62D 15/02

(54) **Ansteuereinheit und Verfahren zur Regelung einer Gurtkraft**
Control unit and method for adjusting belt strength
Unité de commande et procédé destiné au réglage de la force d'une ceinture

(30) Priorität: 11.08.2006 DE 102006037590
(43) Veröffentlichungstag der Anmeldung: 13.02.2008
(73) Patentinhaber: ROBERT BOSCH GMBH, 70442 Stuttgart (DE)
(72) Erfinder: Kuttenberger, Alfred, 71083 Herrenberg (DE)

(56) Entgegenhaltungen:
- EP-A1- 1 470 977
- US-A1- 2005 146 128

## Beschreibung

### Stand der Technik

Die Erfindung geht aus von einer Ansteuereinheit und einem Verfahren zur Regelung einer Gurtkraft nach der Gattung der nebengeordneten Ansprüche. Aus der DE 10 2004 041 425 B3 ist ein Rückhaltesystem für ein Kraftfahrzeug bekannt, bei dem ein Steuergerät Sensorsignale hinsichtlich einer Kollision des Kraftfahrzeugs auswertet. Wird eine Kollision festgestellt, so wird ein Gurtstrammer mit einer vorgegebenen Rückhaltekraft aktiviert. Damit wird die Gurtkraft in einem hierfür erforderlichen Zeitraum verstärkt.

Aus der US 2005/0146128 A1 ist ein Fahrerrückhaltesystem nach dem Oberbegriff des Anspruchs 1 bekannt, bei dem eine Gurtkraft für den Fall, dass eine Tür geöffnet ist und der Rückwärtsgang eingelegt wird, reduziert wird.

### Offenbarung der Erfindung

### Vorteile der Erfindung

Die erfindungsgemäße Ansteuereinheit mit den Merkmalen des Hauptanspruchs hat demgegenüber den Vorteil, dass die Gurtkraft bei einem Einparken oder einem Rückwärtsfahren verringert wird, so dass es dem Fahrer erleichtert wird, sich zur Seite zu wenden oder sich umzudrehen. Durch die Verringerung der Gurtkraft muss der Fahrer nicht stets gegen den Gurt Kraft aufwenden, während er den Rückraum oder den Seitenraum des Fahrzeugs beobachtet. Ferner ist es allerdings auch nicht erforderlich, dass der Fahrer den Gurt vollständig löst, so dass er in diesem Fall nicht nur seinen Schutz gegen Verletzungen verlieren würde, sondern gegebenenfalls in manchen Ländern auch gegen Straßenverkehrsregeln verstoßen würde, da Fahren ohne Gurt in zahlreichen Ländern stets unzulässig ist. Durch die automatische Lockerung der Gurtkraft wird es dagegen dem Fahrer in entsprechenden Situationen ermöglicht, den Gurt einerseits anzubehalten, und andererseits sich komfortabel gegen den Gurt bewegen zu können, um das Fahrzeugumfeld besser beobachten zu können, so dass die Fahrsicherheit erhöht wird. Durch das in dem nebengeordneten Anspruch beschriebene Verfahren werden entsprechende Vorteile erreicht.

Durch die in den Unteransprüchen aufgeführten Maßnahmen sind vorteilhafte Weiterbildungen und Verbesserungen der in den nebengeordneten Ansprüchen angegebenen Ansteuereinheit bzw. des angegebenen Verfahrens möglich. Besonders vorteilhaft ist es, eine Schnittstelle zu einem Geschwindigkeitssensor vorzusehen, so dass bei einer Erhöhung der Geschwindigkeit die Gurtkraft auch wieder verstärkt werden kann, da in diesem Fall die Sicherheit des Fahrers Vorrang vor einer bequemeren Positionierung zur Beobachtung des Fahrerumfeldes hat.

Erfindungsgemäß ist es vorteilhaft, eine Schnittstelle zu einer Vorrichtung zur Einparkunterstützung vorzusehen, so dass über eine Aktivierung der Vorrichtung zur Einparkunterstützung ein Einparkvorgang an die Ansteuereinheit übermittelt werden kann. Hierdurch ist eine automatische Aktivierung der Gurtkraftlockerung möglich, wenn eine Einparkunterstützung angefordert wird oder automatisch aktiviert wird. Hierdurch kann auf eine manuelle Aktivierung einer Lockerung der Gurtkraft durch den Fahrer verzichtet werden.

Weiterhin ist es vorteilhaft, eine Schnittstelle zu einer Abstandsmessvorrichtung vorzusehen, um die Gurtkraft in Abhängigkeit von dem Abstand zu einem Hindernis zu regeln. Nähert sich ein Fahrer einem Hindernis an, so kann die Gurtkraft wieder erhöht werden, da möglicherweise eine Kollision mit dem Hindernis droht. Auch in diesem Fall kann eine hohe Sicherheit für den Fahrer gewährleistet werden.

Es ist ferner vorteilhaft, das Einlegen eines Rückwärtsgangs oder einer Rückwärtsfahrstufe abzufragen, um eine Rückwärtsfahrt zu detektieren und bei einer erkannten Rückwärtsfahrt die Gurtkraft zu reduzieren. Denn bei einer Rückwärtsfahrt wird im Allgemeinen von dem Fahrer verlangt, dass er sich umdreht, um den Fahrbereich des Fahrzeugs hinter dem Heck des Fahrzeugs zu beobachten. Somit wird das bei einer Rückwärtsfahrt erforderliche Umdrehen des Fahrers durch eine automatische Lockerung der Gurtkraft bei einem eingelegten Rückwärtsgang besonders erleichtert.

Ferner ist entsprechend eine Gurteinrichtung mit einer erfindungsgemäßen Ansteuereinheit vorteilhaft, bei der die Spannkraft des Gurtes entsprechend geregelt und insbesondere gelockert wird.

### Kurze Beschreibung der Zeichnungen

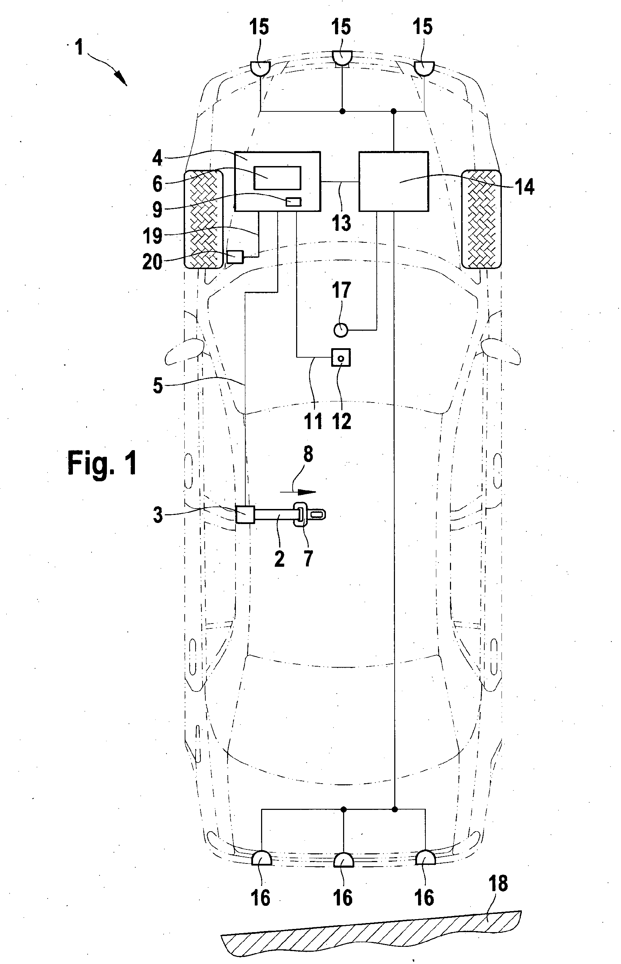

Ausführungsbeispiele der Erfindung sind in den Zeichnungen dargestellt und in der nachfolgenden Beschreibung näher erläutert.
Es zeigen Figur 1 eine schematische Darstellung eines Fahrzeugs mit einer erfindungsgemäßen Ansteuereinheit in einer Aufsicht,

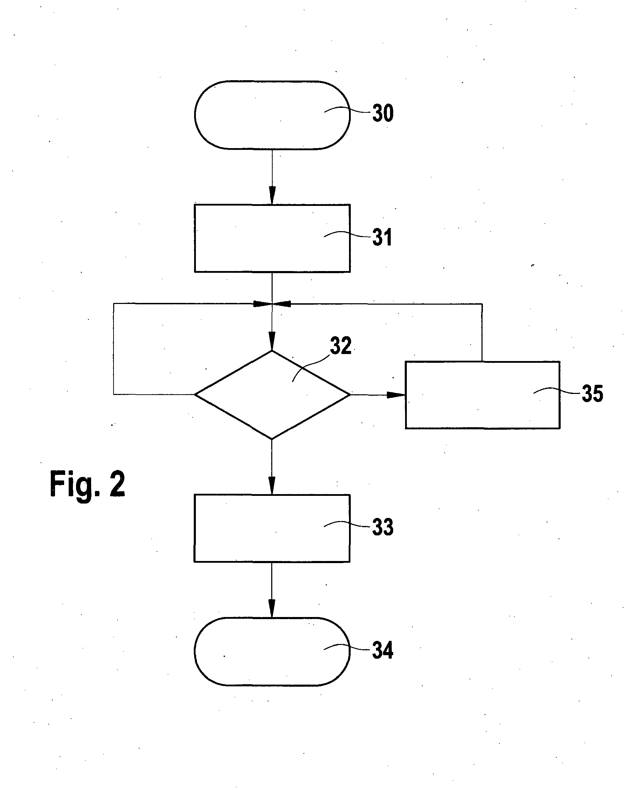

Figur 2 einen Verfahrensablauf eines erfindungsgemäßen Verfahrens.

### Ausführungsformen der Erfindung

In der Figur 1 ist ein Kraftfahrzeug 1 schematisch dargestellt. In dem Fahrzeug ist eine Sicherheitsgurteinrichtung angeordnet, insbesondere für den Fahrer des Fahrzeugs. Die Gurtkraft eines Gurtes 2 lässt sich über eine Stelleinrichtung 3 regeln. Die Stelleinrichtung 3 wird hierzu von einer Ansteuereinheit 4 elektronisch angesteuert, so dass die Gurtkraft in Abhängigkeit von elektronischen Signalen der Ansteuereinheit 4 eingestellt wird. Hierzu ist die Ansteuereinheit 4 über eine Schnittstelle 5 mit der Stelleinrichtung 3 verbunden. Zur Bestimmung der Ansteuersignale für die Stelleinrichtung 3 weist die Ansteuereinheit 4 eine Recheneinheit 6 auf.

Der Gurt 2 weist eine Gurtzunge 7 auf, die zur Sicherung des Fahrers mit einem in der Figur 1 nicht dargestellten Gurtschloss verbunden wird. Um die Verbindung der Gurtzunge 7 mit dem Gurtschloss zu erreichen, zieht ein Fahrer den Gurt aus einer Halterung, in der bevorzugt die Stelleinrichtung 3 angeordnet ist. In einer ersten Ausführungsform ist in der Halterung ein Federelement angeordnet, das eine Kraft entgegen der Pfeilrichtung 8 auf den Gurt ausübt, so dass der Gurt in einem Normalzustand stets gespannt ist. Eine Beeinflussung der Gurtkraft durch die Stelleinrichtung kann nun derart erfolgen, dass das Federelement blockiert wird. In einer weiteren Ausführungsform kann jedoch auch der Gurt in der Weise blockiert werden, dass der Gurt zwar noch in Pfeilrichtung 8 bewegt werden kann, bei einem Loslassen des Gurtes jedoch ein Rastelement einhakt, das ein Rückziehen des Gurtes gegen die Pfeilrichtung 8 verhindert. In einer weiteren Ausführungsform kann jedoch die Stelleinrichtung 3 auch einen Elektromotor aufweisen, dessen Drehmoment durch die Ansteuereinheit 4 gesteuert wird. Der Elektromotor arbeitet gegen die Pfeilrichtung 8, so dass in Abhängigkeit von einer Bestromung des Elektromotors eine dem Drehmoment des Motors entsprechende Kraft auf den Gurt 2 einwirkt. In einer weiteren Ausführungsform kann die Ansteuereinheit 4 und die Stelleinrichtung auch in einem Bauteil integriert werden, so dass die elektronische Ansteuereinheit in diesem Bauteil mit der Stelleinrichtung verbunden wird.

Die Ansteuereinheit 4 weist ferner eine Speichereinheit 9 auf, in der eine Ansteuervorschrift für die Stelleinrichtung 3 abgelegt ist. Entsprechend dieser Ansteuervorschrift in dem Speicher 9 regelt die Ansteuereinheit 4 über die Stelleinrichtung 3 die entgegen der Pfeilrichtung 8 wirkende Kraft auf den Gurt. Insbesondere ist für eine normale Benutzung des Gurtes eine bestimmte Kraft vorgeschrieben, mit der der Gurt gespannt wird. In erfindungsgemäßer Weise kann die Ansteuereinheit die Gurtkraft auf einen weiteren, niedrigeren Wert, beispielsweise die halbe Gurtkraft oder 25% der vorgegebenen Gurtkraft regeln. Auch mit der reduzierten Gurtkraft kann sich der Gurt 2 an den Körper des Fahrers anlegen. In einer anderen Ausführungsform kann die Gurtkraft auch auf null gesetzt werden, so dass der Gurt lose wird.

Ein Lösen des Gurtes bzw. eine Verminderung der Gurtkraft erfolgt bei einem erkannten Einparkvorgang und/oder bei einem erkannten Rückwärtsvorgang. In einer ersten Ausführungsform weist die Ansteuereinheit 4 eine erste Schnittstelle 11 auf, über die eine Gangwahleinheit 12 ausgelesen wird. Die Gangwahleinheit 12 kann die Schaltung des Fahrzeugs oder die Fahrstufenwahl bei einem Automatikgetriebe sein. Wird der Rückwärtsgang bzw. die Rückwärtsfahrstufe eingelegt, so erfasst die Ansteuereinheit 4 diese Wahl über die erste Schnittstelle 11. In diesem Fall wird die Gurtkraft durch die Ansteuereinheit 4 solange gesenkt, bis entweder der Leerlauf oder eine Vorwärtsfahrstufe bzw. ein Vorwärtsgang wieder eingelegt wird.

Ergänzend oder alternativ hierzu weist die Ansteuereinheit 4 eine zweite Schnittstelle 13 auf, über die die Ansteuereinheit 4 mit einer Einrichtung zur Einparkunterstützung 14 verbunden ist. Die Einrichtung zur Einparkunterstützung 14 ist bevorzugt als eine Ansteuer- und Auswerteeinheit zur Auswertung von Fahrzeugumfeldsensoren 15, 16 ausgeführt, die an der Vorderseite (Sensoren 15) und/oder an der Rückseite (Sensoren 16) des Fahrzeugs 1 angeordnet sind. Die Umfeldsensoren 15, 16 sind beispielsweise als Ultraschallsensoren oder als Radarsensoren ausgeführt. In einer ersten Ausführungsform erfassen sie Abstände zu Hindernissen in der Fahrzeugumgebung über ein Echomessverfahren. Diese Abstände werden dem Fahrer angezeigt. In einer weiteren Ausführungsform können sie jedoch auch das Fahrzeugumfeld derart vermessen, dass die Einrichtung zur Einparkunterstützung 14 eine Einparktrajektorie bestimmt und das Fahrzeug automatisch oder nach Anweisung durch den Fahrer in eine Parklücke gefahren wird. Die Einrichtung zur Einparkunterstützung 14 kann dabei entweder automatisch oder über ein Bedienelement 17 aktiviert werden. Sobald die Einrichtung zur Einparkunterstützung 14 aktiviert wird, senkt die Ansteuereinheit 4 die Gurtkraft ab bzw. löst den Gurt, wie oben beschreiben. Nach Abschluss des Einparkvorgangs wird die Gurtkraft wieder auf den Normalwert geregelt.

In einer besonderen Ausführungsform kann zusätzlich der Abstand zu Hindernissen in der Fahrzeugumgebung überwacht werden. Nähert sich beispielsweise das Fahrzeug mit seiner Rückseite an ein Hindernis 18 an, so erfassen die Umfeldsensoren 16 an der Fahrzeugrückseite, das der Abstand eine vorgegebene Grenze von beispielsweise 50 cm unterschreitet. In diesem Fall könnte sich durch ein versehentliches, plötzliches Loslassen der Kupplung das Fahrzeug sprunghaft bewegen und mit dem Hindernis 18 kollidieren. Um dem Fahrer einen optimalen Schutz in einem Fall einer solchen Kollision zu bieten, wird die Gurtkraft durch die Ansteuereinheit 4 wieder auf den gespeicherten Normalwert geregelt, wenn der Abstand, der von den Umfeldsensoren 15, 16 erfasst wird, die vorgegebene Grenze unterschreitet. In einer weiteren Ausführungsform kann die Gurtkraft abstandsabhängig auch derart geregelt werden, dass für verschiedene Abstände verschiedene Kraftstufen vorgesehen sind. So kann beispielsweise bei einem Abstand von 1,5 m die Gurtkraft auf 50%, bei einem Abstand von 1m auf 75% und bei einem Abstand von einem halben Meter wieder auf die volle Gurtkraft erhöht werden.

In einer weiteren Ausführungsform weist die Ansteuereinheit eine Schnittstelle 19 auf, über die die Ansteuereinheit 4 mit einem Geschwindigkeitssensor 20 in dem Fahrzeug 1 verbunden ist. Der Geschwindigkeitssensor 20 ist beispielsweise als ein Radsensor im Fahrzeug ausgeführt. In einer weiteren Ausführungsform kann auch eine Geschwindigkeitsinformation über eine als Datenbus ausgeführte Schnittstelle 19 an die Ansteuereinheit 4 übertragen werden. Überschreitet die festgestellte Fahrzeuggeschwindigkeit einen vorgegebenen Wert, beispielsweise 25 km/h, so wird die Gurtkraft, wenn sie zuvor abgesenkt war, wieder auf einen Normalwert geregelt. Hierdurch wird bei höheren Fahrzeuggeschwindigkeiten wieder der volle Schutz des Gurtes für den Kollisionsfall hergestellt. Die vorgegebene Grenze der Geschwindigkeit ist bevorzugt ebenfalls in dem Speicher 9 abgelegt.

In der Figur 2 ist ein erfindungsgemäßer Verfahrensablauf dargestellt. In einem Initialisierungsschritt 30 wird ein die Verringerung der Gurtkraft auslösendes Ereignis ermittelt, beispielsweise das Einlegen eines Rückwärtsgangs oder die Aktivierung einer Einrichtung zur Einparkunterstützung. In einem anschließenden Stellschritt 31 senkt die Stelleinrichtung 3 nach Anweisung durch die Ansteuereinheit 4 die Gurtkraft auf den in dem Speicher 9 vorgegebenen Wert ab. In einem anschließenden Prüfschritt 32 wird überprüft, ob die Absenkung der Gurtkraft noch gewünscht bzw. erforderlich ist. Wird in dem Prüfschritt 32 festgestellt, dass der Rückwärtsgang wieder gelöst wurde bzw. die Einrichtung zur Einparkunterstützung deaktiviert wurde, so wird zu einem Rückstellschritt 33 verzweigt, in dem die ursprüngliche, vorgegebene Gurtkraft wieder eingestellt wird. Der Rückstellschritt 33 wird auch erreicht, wenn in dem Prüfschritt 32 festgestellt wird, dass eine vorgegebene Geschwindigkeit überschritten wird. Anschließend wird das Verfahren in einem Endschritt 34 beendet. Wird in dem Prüfschritt 32 festgestellt, dass ein Hindernis in der Nähe des Fahrzeugs detektiert wurde, so wird in einem Anpassungsschritt 35 gegebenenfalls die Gurtkraft an einen Zwischenwert zwischen dem Normalwert für die Gurtkraft und dem reduzierten Wert angepasst. Anschließend wird zu dem Prüfschritt 32 zurückverzweigt. Ist in dem Prüfschritt 32 der Rückwärtsgang noch eingelegt, ist die Einrichtung zur Einparkunterstützung noch aktiv und wird auch keine Annäherung an ein Hindernis sowie eine Geschwindigkeitsüberschreitung erfasst, so wird zu dem Prüfschritt 32 zurückverzweigt, so dass dieser nach einer vorgegebenen Zeit wiederholt wird.

## Patentansprüche

1. Ansteuereinheit (4) zur Regelung einer Gurtkraft mit einer Schnittstelle (5) zu einer Einrichtung (3) zur Beeinflussung der Gurtkraft wenigstens eines Gurtes (2), **gekennzeichnet durch** eine Schnittstelle (11, 13) zu einer Einrichtung zur Ermittlung eines Einpark- oder Rückfahrvorgangs, wobei die Ansteuereinheit (4) bei einem ermittelten Einpark- oder Rückfahrvorgang an die Einrichtung (3) zur Beeinflussung der Gurtkraft eine Anweisung zur Reduzierung der Gurtkraft des Gurtes (2) ausgibt, **gekennzeichnet durch** eine Schnittstelle (13) zu einer Einrichtung (14) zur Einparkunterstützung, wobei ein Einparkvorgan bei einer Ermittlung einer Aktivierung der Einrichtung zur Einparkunterstützung (14) emittelt wird.

2. Ansteuereinheit nach Anspruch 1, **gekennzeichnet durch** eine Schnittstelle (19) zu einem Geschwindigkeitssensor (20) zur Ermittlung einer Fahrzeuggeschwindigkeit, wobei die Ansteuereinheit die ermittelte Fahrzeuggeschwindigkeit mit einem vorgegebenen Wert zum Erhöhen der reduzierten Gurtkraft bei einem Überschreiten des vorgegebenen Wertes vergleicht.

3. Ansteuereinheit nach einem der vorhergehenden Ansprüche, **gekennzeichnet durch** eine Schnittstelle (13) zu einer Abstandsmessvorrichtung (14, 15, 16) zur Ermittlung eines Abstandes eine Fahrzeugs, in dem die Ansteuereinheit angeordnet ist, zu einem Hindernis, wobei die Ansteuereinheit (4) die Gurtkraft in Abhängigkeit von dem Abstand zu dem Hindernis regelt.

4. Verfahren zur Regelung einer Gurtkraft, **dadurch gekennzeichnet, dass** ein Einpark- oder Rückfahrvorgang ermittelt wird und das während des ermittelten Einpark- oder Rückfahrvorgangs eine Gurtkraft reduziert wird, **dadurch gekennzeichnet, dass** ein Einparkvorgang dann ermittelt wird, wenn eine Vorrichtung zur Einparkunterstützung aktiviert wird..

5. Verfahren nach Anspruch 5, **dadurch gekennzeichnet, dass** bei einem Überschreiten einer vorgegebnen Geschwindigkeit die Gurtkraft wieder verstärkt wird.

6. Verfahren nach einem der Ansprüche 5-6, **dadurch gekennzeichnet, dass** der Abstand von einem Fahrzeug zu einem Hindernis gemessen wird und dass die Gurtkraft wenigstens eines Gurtes in dem Fahrzeug in Abhängigkeit von dem Abstand zu dem Hindernis eingestellt wird.

7. Gurteinrichtung in einem Fahrzeug mit einem Gurt (2) zur Sicherung eines Passagiers in dem Fahrzeug, mit einer Vorrichtung (3) zur Beeinflussung einer Spannkraft des Gurtes, **dadurch gekennzeichnet, dass** die Vorrichtung (3) zur Beeinflussung einer Spannkraft des Gurtes durch eine Ansteuereinheit (4) nach einem der Ansprüche 1-3 gesteuert wird.

## Claims

1. Actuator unit (4) for adjusting a seatbelt force with an interface (5) with a device (3) for influencing the seatbelt force of at least one seatbelt (2), **characterized by** an interface (11, 13) with a device for detecting a parking process or reversing process, wherein when a parking process or reversing process is detected the actuator unit (4) outputs to the device (3) for influencing the seatbelt force an instruction to reduce the seatbelt force of the seatbelt (2), **characterized by** an interface (13) with a parking assistant device (14), wherein when activation of the parking assistant device (14) is detected a parking process is detected.

2. Actuator unit according to Claim 1, **characterized by** an interface (19) with a speed sensor (20) for detecting a vehicle speed, wherein the actuator unit compares the detected vehicle speed with a predefined value for increasing the reduced seatbelt force when the predefined value is exceeded.

3. Actuator unit according to one of the preceding claims, **characterized by** an interface (13) with a distance-measuring device (14, 15, 16) for detecting a distance between a vehicle in which the actuator unit is arranged and an obstacle, wherein the actuator unit (4) adjusts the seatbelt force as a function of the distance from the obstacle.

4. Method for adjusting a seatbelt force, **characterized in that** a parking process or reversing process is detected and that a seatbelt force is reduced during the detected parking process or reversing process, **characterized in that** a parking process is detected when a parking assistant apparatus is activated.

5. Method according to Claim 5, **characterized in that** when a predefined speed is exceeded, the seatbelt force is increased again.

6. Method according to one of Claims 5-6, **characterized in that** the distance between a vehicle and an obstacle is measured, and **in that** the seatbelt force of at least one seatbelt in the vehicle is set as a function of the distance from the obstacle.

7. Seatbelt device in a vehicle having a seatbelt (2) for securing a passenger in the vehicle, having an apparatus (3) for influencing a tensioning force of the seatbelt, **characterized in that** the apparatus (3) for influencing a tensioning force of the seatbelt is controlled by an actuator unit (4) according to one of Claims 1-3.

## Revendications

1. Unité de commande (4) destinée à réguler la force de retenue d'une courroie et présentant une interface (5) avec un dispositif (3) qui agit sur la force de retenue d'au moins une courroie (2),
**caractérisée par**
une interface (11, 13) dotée d'un dispositif de détermination d'une opération de stationnement ou de marche arrière, l'unité de commande (4) délivrant au dispositif (3) agissant sur la force de retenue de la courroie une indication de réduction de la force de retenue de la courroie (2) au cas où une opération de stationnement ou de marche arrière est déterminée et
une interface (13) avec un dispositif (14) d'assistance au stationnement, une opération de stationnement étant détectée lorsqu'il a été déterminé que le dispositif (14) d'assistance au stationnement a été activé.

2. Unité de commande selon la revendication 1, **caractérisée par** une interface (19) avec une sonde de vitesse (20) qui détermine la vitesse d'un véhicule, l'unité de commande comparant la vitesse déterminée pour le véhicule à une valeur prédéterminée pour augmenter la réduction de la force de retenue de la courroie lorsque la valeur prédéterminée est dépassée.

3. Unité de commande selon l'une des revendications précédentes, **caractérisée par** une interface (13) avec un dispositif (14, 15, 16) de mesure de distance qui détermine la distance entre un obstacle et le véhicule dans lequel l'unité de commande est placée, l'unité de commande (4) régulant la force de retenue de la courroie en fonction de la distance par rapport à l'obstacle.

4. Procédé de régulation de la force de retenue d'une courroie, **caractérisé en ce qu'**une opération de stationnement ou de marche arrière est déterminée et **en ce que** la force de retenue d'une courroie est réduite pendant que l'opération de stationnement ou de marche arrière est déterminée, **caractérisé en ce qu'**une opération de stationnement est déterminée si un dispositif d'assistance au stationnement a été activé.

5. Procédé selon la revendication 5, **caractérisé en ce que** la force de retenue de la courroie est de nouveau augmentée lorsqu'une vitesse prédéterminée est dépassée.

6. Procédé selon l'une des revendications 5 et 6, **caractérisé en ce que** la distance entre un véhicule et un obstacle est mesurée et **en ce que** la force de retenue d'au moins une courroie du véhicule est ajustée en fonction de la distance par rapport à l'obstacle.

7. Dispositif de courroie dans un véhicule, présentant une courroie (2) qui protège un passager du véhicule et présentant un ensemble (3) destiné à agir sur la force de tension de retenue de la courroie, **caractérisé en ce que** l'ensemble (3) est commandé pour agir sur la force de tension de retenue de la courroie par une unité de commande (4) selon l'une des revendications 1 à 3.
